# EUROPEAN PATENT SPECIFICATION

(11) **EP 2 103 117 B1**
(45) Date of publication and mention of the grant of the patent: **07.03.2012**
(21) Application number: 07827092.3
(22) Date of filing: 30.11.2007
(51) Int. Cl.: H04N 5/445, H04N 5/44

(54) **A METHOD FOR AUTOMATIC CHANNEL SWITCHING**
VERFAHREN ZUR AUTOMATISCHEN KANALUMSCHALTUNG
PROCÉDÉ POUR CHANGEMENT AUTOMATIQUE DE CHAÎNE

(30) Priority: 18.12.2006 TR 200607205
(43) Date of publication of application: 23.09.2009
(73) Proprietor: ARÇELIK A.S., 34950 Istanbul (TR)
(72) Inventor: BALTACI, Cetin, 34950 Istanbul (TR)
(86) International application number: PCT/IB2007/054870
(87) International publication number: WO 2008/075236

(56) References cited:
- WO-A-03/017651
- WO-A-2006/038195
- US-A- 5 684 525
- US-A1- 2002 085 128
- US-B1- 6 802 076

## Description

Field of the Invention

The present invention relates to a method for automatic channel switching which, when a TV program determined by the user starts to broadcast, enables the television to automatically switch to the desired channel.

Background of the Invention

With the increase in the number of television channels, it has got difficult for the television users to find programs of their interest just by viewing the channels in a row with the help of a remote control. This situation has led the users to use the program tables showing the broadcast flow of television channels. The said program tables are traditionally found in newspapers and magazines.

However, use of these tables on paper has got difficult as the number of channels increased. The reason of this difficulty is that the user is required to remember the broadcast day and time of the programs which he/she reads in the table and which are of interest to him/her, or that he/she needs to constantly follow through the table and switch to the channel himself/herself via remote control at the time of broadcast. Consequently, as the number of programs that are of interest to the user increased, keeping track of the programs has also got difficult.

Television manufacturers have commercialized televisions which have automatic channel switching function with the purpose of overcoming this problem. These televisions, upon the user selecting the program of his/her interest, automatically switch to the channel where the program is being broadcast, at the time of broadcast. Thus the user does not have to remember the time and channel no of the program nor constantly follow it from the program list.

However users of older model televisions are required to replace, or update the software of their televisions. These are methods which impose additional cost and which are not preferred by the users.

Several methods have been developed to enable the users of televisions lacking the function of automatic channel switching to benefit from this function. One of these is disclosed in the International patent application No. WO03017651. The method in this application comprises the use of a television remote control with a display screen. Program tables are downloaded to this remote control from a desktop device such as a PC preferably via wireless means, and are viewable on the display of the remote control. When a program scheduled to be broadcast in the near future is selected, the time and channel no of the said program is stored in the memory via a processor on the remote control, and a signal is sent, when the broadcast time of the program comes, to enable the television to display the desired channel.

The method disclosed in the said application has enabled users of televisions which lack the automatic channel switching function, to benefit from this function. However, the method of this application is a costly method as it requires use of a remote control comprising expensive parts such as a display screen for displaying program tables, a memory big enough to enable storage of most of these program tables and a processor capable of downloading and processing these program tables and performing other operations. In fact, parts capable of the functions mentioned above already exist in personal computers which are in use almost at every home nowadays.

In conclusion, there is an increasing need for an automatic channel switching method which enables users of televisions which lack automatic channel switching function and which, in doing so, uses the resources in personal computers generally in use at homes for the required parts such as display, memory, processor.

Summary of the Invention

The objective of the present invention is to realize a method for automatic channel switching which enables users of televisions, which lack automatic channel switching function, to use this function with less cost and without waste of resources. With this purpose, a solution has been provided to this problem by an automatic channel switching method which uses the resources of personal computers generally in use at homes.

Detailed Description of the Invention

The method for automatic channel switching realized to fulfill the objectives of the present invention is illustrated in the accompanying figures, in which;

Figure 1 is the block diagram of the inventive method for automatic channel switching.

Figure 2 is the view of an example user interface of the software of the inventive method for automatic channel switching in a personal computer.

The parts in the figures are individually numbered, where the numbers refer to the following:

1. Personal computer

2. Remote control

3. Television

4. User interface

5. Network

6. Network server

7. Date

8. Channel

9. Program table

10. Program name

11. Channel name

12. Channel no

13. Time

14. "Switch to channel"

15. "Audible warning"

16. "Open in PIP"

17. Remote control channel no

18. Remote control communication interface type

19. "Connect" button

20. "Send the selections" button

21. Information line

The inventive method for automatic channel switching essentially comprises a personal computer (1) operating a software which enables displaying of the program tables showing the broadcast flow of channels, providing the user the opportunity to make selections from these program tables and transmitting the information related to those selected programs to the remote control (2), a remote control (2) which stores this transmitted program information and enables the television to switch to the desired channel at the broadcast time of the program according to the said information, and a television (3).

The said personal computer (1) can display the program tables showing the broadcast flow of channels by means of an auxiliary software. This software enables the user to view the program table and to make selections on it via a user interface (4). The software stores the date, time and name of the channel and other information related to the channel provided by the table for the program selected by the user for automatic channel switching from the program table displayed via the user interface (4).

Program tables can be loaded onto the personal computer (1) via any portable memory means such as a memory stick, floppy disk or a compact disc, and can also be downloaded via a network (5) to which the personal computer (1) is connected. In the preferred embodiment of the invention, the program tables located on a web site provided by a network server (6) connected to the network (5) are downloaded to the personal computer (1) and used by the said software.

There are two ways to determine the position number of the channel, in which the user has selected a program, in the memory of the television (3). The first one is to have the user, following the selection of the program of his/her interest from the program table, manually inputting the position number of the channel in which the program is broadcasted. In the invention, names and position numbers of all these channels stored in the memory of the television (3) are stored in a channel list in the personal computer. When the user selects a program, the software automatically determines the channel position number matching with the channel name shown in the program table of the desired program by using this channel list.

After the program information comprising date, time and channel position number required for automatic channel switching are saved by the software, these informations are transferred to the remote control via any communication interface. The said interface can be wired or wireless (USB, Bluetooth, IrDA, RS232, etc.).

The remote control (2) comprises a memory big enough to save small sized data consisting of program date, time and channel position number selected on the personal computer (1), a timer to keep the time and date, and a processor with a relatively low capacity to open the desired channel at the right time in accordance with the said data. Additionally, the remote control also comprises a connector compatible with the communication interface which is used between the remote control and the personal computer (1). When the date and time of the timer matches the date and time specified in any of the program information saved on the remote control, the remote control (2) sends the signal of the desired channel position number to the television (3). Thus, displaying of the desired channel at the desired date and time on the television (3) is ensured.

After automatic channel switching is realized by using the program information arranged for a program by means of a remote control (2), the information of the said program is deleted from the memory of the remote control (2).

In addition to the feature of switching the channel automatically via the user interface (4) on the personal computer, the user, preferably, can select the options of audible warning and opening in PIP (opening in the second window) before the selected program begins. When the feature of audible warning is selected, upon matching of the date and time of the timer on the remote control (2) with some time (for example 5 minutes) prior to the date and time specified in the saved program information, audible warning is given via a speaker on the remote control (2). When the feature opening in PIP is selected, upon matching of the date and time of the timer on the remote control (2) with the date and time specified in the saved program information, the remote control (2) sends to the television a signal for opening the said channel in PIP.

Although the said television (3) is not required to include any additional features other than the ability to communicate with the remote control (2), for all the other features of the invention to be used, the television (3) should include PIP feature in order for the feature of opening in PIP to function.

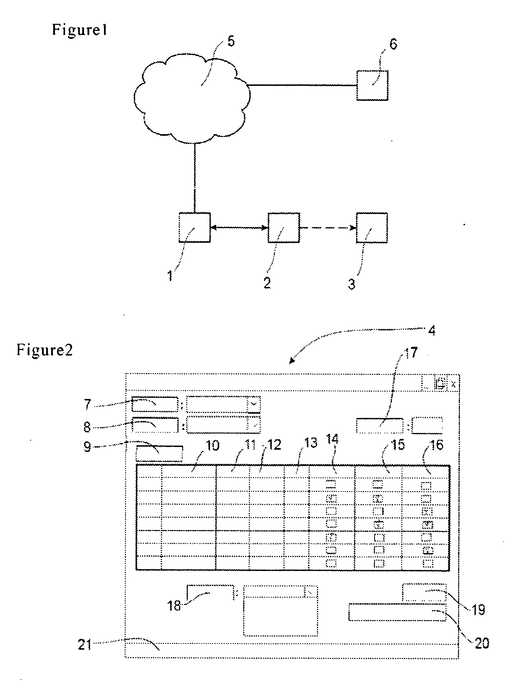

In one embodiment of the invention, the user interface (4) illustrated in Figure 2 is used. There is a program table (9) on this exemplary user interface (4) shown for the selected date (7) and channel (8). On this program table (9), there are columns of program name (10), channel name (11), channel no (12), time (13) and the columns of "Switch to channel" (14), "Audible warning" (15) and "Open in PIP" (16). There are also the remote control channel number (17) of the selected channel and the remote control communication interface type (18) selected by the user, on the user interface (4). Establishing connection with the remote control (2) is done by a "Connect" button (19) and the user's sending his/her selections to the remote control (2) is done by a "Send the selections" button. There is an information line (21) at the bottom of the said user interface (4) showing the remote control (2) connection status.

Within the framework of the basic principles described herein, development of various embodiments of the invention is possible and details not described in this description are details known by a person skilled in the art. The invention is essentially according to the claims.

## Claims

1. A method for automatic channel switching, which enables a television (3) to automatically switch to the desired channel when the program determined by the user starts to be broadcasted, **characterized in that**
the method comprises
operating a software on a personal computer that stores in a channel list the names and position numbers of channels as stored in said television's memory (1), whereby the software
- displays the program table showing the broadcast flow of channels and
- enables the user to view said program table and to make selections on this table via a user interface (4),
- saves the date, time and channel name of programs selected by the user for automatic channel switching from the program tables displayed via the user interface (4)
- determines the position number of said channel as stored in the television's memory
- transmits the date, time and channel position number information related to selected programs to a remote control (2)
and
storing this transmitted program information by means of the remote control (2) whereby the remote control (2) causes the television (3) to automatically switch to the desired channel at broadcast time of the program selected by the user according to the said information.

2. A method for automatic channel switching according to claim 1 , **characterized in that** the user, upon selecting the program he/she wants to watch from the program tables via the software, manually inputs via the user interface and saves the position numbers of selected programs as stored in the television's memory.

3. A method for automatic channel switching according to Claim 1, wherein all the channel names and position numbers saved in the memory of the television are stored in a channel list in the personal computer.

4. A method for automatic channel switching according to Claim 3, **characterized in that**, when the user selects the program he/she wants to watch, the software, by using the said channel list, automatically determines and saves the channel position number of the concerned program matching the channel name shown in the program table.

5. A method for automatic channel switching according to any of the preceding claims, **characterized in that** the said program tables are downloaded via a network (4) to which the personal computer is connected (1).

6. A method for automatic channel switching according to any of the preceding claims, **characterized in that** the program tables located on a network page provided by a network server (6) connected to the network (5) are downloaded to the personal computer (1) and used by the said software.

7. A method for automatic channel switching according to any of the preceding claims, **characterized in that** the program information comprising the program start date, time and channel position number generated for each selected program, is transferred from the personal computer (1) to the remote control (2) via any communication interface.

8. A method for automatic channel switching according to any of the preceding claims, **characterized in that** the said remote control (2) comprises a memory big enough to save small sized data consisting of program date, time and channel position number.

9. A method for automatic channel switching according to any of the preceding claims, **characterized in that** the said remote control (2) comprises a timer to determine the time and date.

10. A method for automatic channel switching according to any of the preceding claims, **characterized in that** the said remote control (2) comprises a processor which will enable it to open the desired channel at the right time in accordance with the program and time data.

11. A method for automatic channel switching according to any of the preceding claims, **characterized in that** after automatic channel switching is performed, the desired program information are deleted from the memory of the remote control (2).

12. A method for automatic channel switching according to any of the preceding claims, **characterized in that** the user can select the feature of audible warning for the program selected via the user interface (4).

13. A method for automatic channel switching according to Claim 12, **characterized in that**, when the feature of audible warning is selected for a program via the user interface (4), upon matching of the date and time of the timer on the remote control (2) with some time prior to the date and time specified in the saved program information, audible warning is given via a speaker on the remote control (2).

14. A method for automatic channel switching according to any of the preceding claims, **characterized in that** the television has PIP (small window) feature.

15. A method for automatic channel switching according to Claim 14, **characterized in that** the user can select the feature of opening in PIP (opening in the second window) for the channel selected via the user interface (4).

16. A method for automatic channel switching according to Claim 15, **characterized in that**, when the feature of opening in PIP is selected via the user interface (4), upon matching of the date and time of the timer on the remote control (2) with the date and time specified in the saved program information, the remote control (2) sends to the television (3) a signal for opening the said channel in PIP.

## Patentansprüche

1. Verfahren zum automatischen Kanalwechsel, wodurch ein Fernsehgerät (3) automatisch zum gewünschten Kanal wechseln kann, wenn die Ausstrahlung einer vom Benutzer bestimmten Sendung beginnt, **dadurch gekennzeichnet, dass** das Verfahren folgendes umfasst:
Betreiben einer Software auf einem Personalcomputer (1), die in einer Kanalliste Namen und Positionsnummern von Kanälen speichert, wie sie im Speicher des Fernsehgeräts (3) gespeichert sind, wodurch die Software
die Programmtabellen unter Anzeige des Ausstrahlungsablaufs der Kanäle anzeigt und
es dem Benutzer ermöglicht, die Programmtabelle aufzurufen und auf dieser Tabelle über eine Benutzeroberfläche (4) eine Auswahl zu treffen,
das Datum, die Uhrzeit und den Kanalnamen von Sendungen speichert, die vom Benutzer aus den über die Benutzeroberfläche (4) angezeigten Programmtabellen zum automatischen Kanalwechsel ausgewählt werden,
die Positionsnummer des Kanals bestimmt, wie sie im Speicher des Fernsehgeräts (3) gespeichert ist,
- die Information in Bezug auf ausgewählte Sendungen auf eine Fernbedienung (2) überträgt sowie Datum, Zeit und Positionsnummer des Kanals,
Speichern der übertragenen Programminformation mittels der Fernbedienung (2), wodurch die Fernbedienung (2) das Fernsehgerät (3) veranlasst, entsprechend der Information zum Zeitpunkt der Ausstrahlung der vom Benutzer ausgewählten Sendung automatisch zu dem gewünschten Kanal zu wechseln.

2. Verfahren zum automatischen Kanalwechsel nach Anspruch 1, **dadurch gekennzeichnet, dass** der Benutzer bei/der Auswahl der Sendung, die er schauen möchte, aus den Programmtabellen über die Software die Positionsnummern der ausgewählten Sendungen, wie sie im Speicher des Fernsehgeräts (3) gespeichert sind, über die Benutzeroberfläche manuell eingibt und speichert.

3. Verfahren zum automatischen Kanalwechsel nach Anspruch 1, wobei alle Kanalnamen und Positionsnummern, die im Speicher des Fernsehgeräts (3) gespeichert sind, in einer Kanalliste im Personalcomputer (1) gespeichert werden.

4. Verfahren zum automatischen Kanalwechsel nach Anspruch 3, **dadurch gekennzeichnet, dass** die Software durch Verwendung der Kanalliste die Kanalpositionsnummer der betreffenden Sendung automatisch bestimmt und speichert, die mit dem in der Programmtabelle angezeigten Kanalnamen übereinstimmt, wenn der Benutzer die Sendung auswählt, die er schauen möchte.

5. Verfahren zum automatischen Kanalwechsel nach einem der vorangehenden Ansprüche, **dadurch gekennzeichnet, dass** die Programmtabellen über ein Netzwerk (4) heruntergeladen werden, mit dem der Personalcomputer (1) verbunden ist.

6. Verfahren zum automatischen Kanalwechsel nach einem der vorangehenden Ansprüche, **dadurch gekennzeichnet, dass** die Programmtabellen, die auf einer Netzwerkseite angeordnet sind, die von einem mit dem Netzwerk (5) verbundenen Netzwerkserver (6) bereitgestellt wird, auf den Personalcomputer (1) heruntergeladen und von der Software benutzt werden.

7. Verfahren zum automatischen Kanalwechsel nach einem der vorangehenden Ansprüche, **dadurch gekennzeichnet, dass** die Programminformation, die das Datum und die Uhrzeit des Starts und die Kanalpositionsnummer der Sendung umfasst, welche für jede ausgewählte Sendung generiert werden, über eine beliebige Kommunikationsschnittstelle vom Personalcomputer (1) an die Ferbedienung (2) übertragen wird.

8. Verfahren zum automatischen Kanalwechsel nach einem der vorangehenden Ansprüche, **dadurch gekennzeichnet, dass** die Fernbedienung (2) einen Speicher umfasst, der groß genug ist, um Daten mit geringen Umfang zu speichern, die aus Datum und Uhrzeit und der Kanalpositionsnummer der Sendung bestehen.

9. Verfahren zum automatischen Kanalwechsel nach einem der vorangehenden Ansprüche, **dadurch gekennzeichnet, dass** die Fernbedienung (2) einen Timer umfasst, um die Uhrzeit und das Datum zu bestimmen.

10. Verfahren zum automatischen Kanalwechsel nach einem der vorangehenden Ansprüche, **dadurch gekennzeichnet, dass** die Fernbedienung (2) einen Prozessor umfasst, der es ihr ermöglicht, den gewünschten Kanal zum richtigen Zeitpunkt entsprechend den Programm- und Zeitdaten zu öffnen.

11. Verfahren zum automatischen Kanalwechsel nach einem der vorangehenden Ansprüche, **dadurch gekennzeichnet, dass** nach dem Durchführen des automatischen Kanalwechsels die Information der gewünschten Sendung aus dem Speicher der Fernbedienung (2) gelöscht wird.

12. Verfahren zum automatischen Kanalwechsel nach einem der vorangehenden Ansprüche, **dadurch gekennzeichnet, dass** der Benutzer die Funktion einer akustischen Warnung für die ausgewählte Sendung über die Benutzeroberfläche (4) auswählen kann.

13. Verfahren zum automatischen Kanalwechsel nach Anspruch 12, **dadurch gekennzeichnet, dass** es bei einer Übereinstimmung von Datum und Uhrzeit des Timers auf der Fernbedienung (2) mit einem Zeitpunkt vor dem Datum und der Uhrzeit, die in der gespeicherten Programminformation angegeben sind, über einen Lautsprecher an der Fernbedienung (2) eine akustische Warnung ausgegeben wird, wenn die Funktion der akustischen Warnung für eine Sendung über die Benutzeroberfläche (4) ausgewählt wird.

14. Verfahren zum automatischen Kanalwechsel nach einem der vorangehenden Ansprüche, **dadurch gekennzeichnet, dass** das Fernsehgerät (3) eine PIP-(Fensterausschnitt)-Funktion aufweist.

15. Verfahren zum automatischen Kanalwechsel nach Anspruch 14, **dadurch gekennzeichnet, dass** der Benutzer die Funktion zum Öffnen in PIP (Öffnen im zweiten Fenster) für den über die Benutzeroberfläche (4) ausgewählten Kanal auswählen kann.

16. Verfahren zum automatischen Kanalwechsel nach Anspruch 15, **dadurch gekennzeichnet, dass** es bei Übereinstimmung von Datum und Uhrzeit des Timers auf der Fernbedienung (2) mit einem Datum und einer Uhrzeit, die in der gespeicherten Programminformation angegeben sind, die Fernbedienung (2) ein Signal zum Öffnen des Kanals in PIP an das Fernsehgerät (3) sendet, wenn die Funktion zum Öffnen in PIP über die Benutzeroberfläche (4) ausgewählt wird.

## Revendications

1. Une méthode pour la commutation automatique des chaînes, qui permet à une télévision (3) de changer automatiquement de chaîne désirée lorsque le programme déterminé par l'utilisateur commence à être diffusé, **caractérisée en ce que** la méthode comprend les étapes de
exécuter un logiciel sur un ordinateur personnel (1) qui stocke dans une liste des chaînes les noms et les numéros de position des chaînes tels que enregistrés dans la mémoire de ladite télévision (3), par lequel le logiciel
- affiche les tableaux de programme montrant le flux de diffusion des chaînes et
- permet à l'utilisateur de voir ledit tableau de programme et de faire des sélections sur ce tableau via une interface utilisateur (4)
- enregistre la date, l'heure et le nom de chaîne des programmes choisis par l'utilisateur pour la commutation automatique des chaînes des tableaux de programme affichés via l'interface utilisateur (4)
- détermine le numéro de position de ladite chaîne tel que stocké dans la mémoire de la télévision (3)
- transmet les informations relatives aux programmes sélectionnés à une télécommande (2) et la date, l'heure et le numéro de position de chaîne
stocker cette information de programme transmise par la télécommande (2) par lequel la télécommande (2) amène la télévision (3) à changer automatiquement de chaîne désirée à l'heure de diffusion du programme sélectionné par l'utilisateur selon ladite information.

2. Une méthode pour la commutation automatique des chaînes selon la Revendication 1, **caractérisée en ce que** l'utilisateur, après avoir sélectionné le programme qu'il/elle veut regarder des tableaux de programme via le logiciel, entre manuellement les numéros de position des programmes sélectionnés tels que stockés dans la mémoire de la télévision (3) via l'interface utilisateur et les enregistre.

3. Une méthode pour la commutation automatique des chaînes selon la Revendication 1, où tous les noms et numéros de position enregistrés dans la mémoire de la télévision (3) sont stockés dans une liste des chaînes dans l'ordinateur personnel (1).

4. Une méthode pour la commutation automatique des chaînes selon la Revendication 3, **caractérisée en ce que**, lorsque l'utilisateur sélectionne le programme qu'il/elle veut regarder, le logiciel, en utilisant ladite liste des chaînes, détermine et enregistre le numéro de position de chaîne du programme concerné correspondant au nom de la chaîne indiquée dans le tableau de programme.

5. Une méthode pour la commutation automatique des chaînes selon l'une quelconque des revendications précédentes, **caractérisée en ce que** lesdits tableaux de programme sont téléchargés via un réseau (4) auquel l'ordinateur personnel (1) est connecté.

6. Une méthode pour la commutation automatique des chaînes selon l'une quelconque des revendications précédentes, **caractérisée en ce que** les tableaux de programme situés sur une page du réseau fournie par un serveur de réseau (6) connecté au réseau (5) sont téléchargés sur l'ordinateur personnel (1) et utilisés par ledit logiciel.

7. Une méthode pour la commutation automatique des chaînes selon l'une quelconque des revendications précédentes, **caractérisée en ce que** les informations de programme comprenant la date et l'heure de début du programme et le numéro de position de chaîne généré pour chaque programme sélectionné, sont transférées de l'ordinateur personnel (1) à la télécommande (2) via toute interface de communication.

8. Une méthode pour la commutation automatique des chaînes selon l'une quelconque des revendications précédentes, **caractérisée en ce que** ladite télécommande (2) comprend une mémoire suffisamment grande pour enregistrer les données de taille petite composées de la date et l'heure du programme et le numéro de position de chaîne.

9. Une méthode pour la commutation automatique des chaînes selon l'une quelconque des revendications précédentes, **caractérisée en ce que** ladite télécommande (2) comprend un compteur pour déterminer l'heure et la date.

10. Une méthode pour la commutation automatique des chaînes selon l'une quelconque des revendications précédentes, **caractérisée en ce que** ladite télécommande (2) comprend un processeur qui lui permet d'ouvrir la chaîne désirée au bon moment en conformité avec les données du programme et de l'heure.

11. Une méthode pour la commutation automatique des chaînes selon l'une quelconque des revendications précédentes, **caractérisée en ce que** après la commutation automatique des chaîne est effectuée, les informations de programme désiré sont supprimées de la mémoire de la télécommande (2).

12. Une méthode pour la commutation automatique des chaînes selon l'une quelconque des revendications précédentes, **caractérisée en ce que** l'utilisateur peut sélectionner la fonction de signal sonore pour le programme sélectionné via l'interface utilisateur (4).

13. Une méthode pour la commutation automatique des chaînes selon la Revendication 12, **caractérisée en ce que** lorsque la fonction de signal sonore est sélectionnée pour un programme via l'interface utilisateur (4), après l'assortiment de la date et l'heure du compteur sur la télécommande (2) et un peu de temps avant la date et l'heure spécifiées dans les informations de programme enregistrées, le signal sonore est donné via un haut-parleur sur la télécommande (2).

14. Une méthode pour la commutation automatique des chaînes selon l'une quelconque des revendications précédentes, **caractérisée en ce que** la télévision (3) a la fonction PIP (petite fenêtre).

15. Une méthode pour la commutation automatique des chaînes selon la Revendication 14, **caractérisée en ce que** l'utilisateur peut sélectionner la fonction d'ouverture en PIP (ouverture dans la deuxième fenêtre) pour la chaîne sélectionnée via l'interface utilisateur (4).

16. Une méthode pour la commutation automatique des chaînes selon la Revendication 15, **caractérisée en ce que** lorsque la fonction d'ouverture en PIP est sélectionnée via l'interface utilisateur (4), après l'assortiment de la date et l'heure du compteur sur la télécommande (2) et la date et l'heure spécifiées dans les informations de programme enregistrées, la télécommande (2) envoie à la télévision (3) un signal d'ouverture de ladite chaîne en PiP.
